# NEW EUROPEAN PATENT SPECIFICATION

(11) **EP 0 251 787 B2**
(45) Date of publication and mention of the opposition decision: **18.06.1997**
(45) Mention of the grant of the patent: 03.10.1990
(21) Application number: 87305847.3
(22) Date of filing: 01.07.1987
(51) Int. Cl.: D21C 9/18, D21F 1/78, D21F 1/80, B01D 33/04

(54) **Apparatus for thickening pulp and paper stock**
Vorrichtung zum Eindicken von Papierfaserbrei
Appareil pour l'épaississement de la pâte à papier

(30) Priority: 03.07.1986 US 882041; 23.03.1987 US 29301
(43) Date of publication of application: 07.01.1988
(73) Proprietor: THE BLACK CLAWSON COMPANY, Middletown, Ohio 45042 (US)
(72) Inventor: Seifert, Peter, Middletown Ohio 45042 (US); Kinne, Michael F., Trenton Ohio 45067 (US); Markham, Larry D., Middletown Ohio 45042 (US)
(74) Representative: Reimann, Thomas, Dr.

(56) References cited:
- EP-A- 0 116 009
- EP-A- 0 162 179
- EP-A- 0 197 731
- DE-A- 2 645 763
- US-A- 1 241 905
- US-A- 2 828 675
- US-A- 3 056 719
- US-A- 4 501 040
- US-A- 4 501 662

## Description

The pulp and paper making industry has for many years made regular use of apparatus for thickening pulp and paper stock, usually for storage or other temporary treatment purposes. The apparatus most commonly used is known as a decker, and is relatively closely comparable in structure and mode of operation with a cylinder type paper machine, in that its main components are a wire-covered cylinder mold and a vat in which the cylinder mold rotates. In operation, the thickened pulp collects on the outer surface of the mold and is then dumped or couched therefrom for transport to a storage tank or other next station.

Deckers occupy considerable floor space, and are also relatively expensive, since the cylinder mold is a fairly complex piece of machinery, including as it does a structural framework for the filter wire. In addition, a decker is necessarily slow in operation, partly because the rotational speed of the cylinder mold must be kept below values at which centrifugal force would tend to cause the thickened pulp to be thrown off its surface, and the surface speed of cylinder molds is commonly in the range of only 61-76m./min (200-250 ft./min).

German OS 30 05 681 and the publication "Vario-Split, eine neue Maschine zur Verbesserung von AP-Rohstoffen" in "Wochenblatt für Papierfabrikation" volume 21/1981 p. 787 - 796 disclose an apparatus, called "Vario-Split", which is suitable for washing aqueous fibre stock suspensions obtained from waste paper and which also can be applied for thickening of such suspensions (OS 30 05 681 column 2, lines 30 to 34, column 2, line 68 to column 3, line 41). A typical stock suspension to be treated is stated to have a consistency of less than 1.5 %, preferably 0.4 to 0.8 % (column 3, lines 61 to 67).

The "Vario-Split" apparatus comprises, according to a preferred embodiment, an endless wire or filter band having an outer surface which co-operates with a substantial portion of the surface of a rotatable cylinder, a flat jet nozzle forming a flat suspension jet which is introduced into a substantially wedge-shaped intermediate space between the outer surface of the wire band and the cylinder, a take-off roll, a catch container for the pressed-out water, means for collecting the thickened pulp and three guide rolls (column 2, last line to column 3, line 41 and the single figure). In washing the stock suspension the apparatus is operated in such a way that the fiber web formed between the outer surface of the wire band and the cylinder has a weight of less than 100 g/m², preferably 30 to 70 g/m², and the wire speed and the circumferential speed of the cylinder is in the order of 400 to 1200 m/min (claim 1 and column 3, last line to column 4, line 8).

By using this apparatus, which is rather complicated in construction, a high production of thickened pulp in tons per day and a high content of solids in this product are not satisfactorily achieved.

US-A-4 501 662 discloses a different construction of apparatus, which comprises at least two dewatering cylinders which are rotatable about vertical axes, and a belt arrangement in the form of an endless foraminous wire or filter band passing around the cylinders so as to revolve thereabout with the wire surface also arranged vertically. Each cylinder is provided with its own stock infeed device which introduces a vertically elongate jet of stock suspension into a vertically extending, wedge-shaped space formed between the converging surfaces of the wire and cylinder. As the cylinder and wire revolve, the introduced stock is squeezed between the cylinder and the wire where it passes around the cylinder, and the water from the stock suspension is expelled through the wire. The dewatered stock is subsequently detached from the cylinder by an associated removal device located in the wedge-shaped space formed between the diverging surfaces of the wire and cylinder, and is downwardly removed, under the action of gravity, from between the wire and cylinder.

The prior apparatus just described possesses the disadvantages that, since the stock suspension only passes through a single dewatering zone, i.e. the zone defined by the cooperation of the wire with one of the cylinders, the extent by which the suspension can be dewatered is limited. In addition, the dewatering of the stock suspension relies upon the tensioning the wire to exert a force between the surface of each cylinder and the wire which is sufficient to force out water contained in the suspension.

Applicants' EP-A-0197731, which is an application of earlier priority date, discloses apparatus which mitigates the aforesaid disadvantages.

The present invention provides apparatus for thickening pulp and paper stock of the general type disclosed in the aforesaid OS 30 05 681, which comprises a frame, first and second liquid-impervious rolls rotatably mounted on substantially horizontal axes in spaced relation in said frame, an endless wire belt arrangement trained around said rolls in wrapping relation with the surfaces thereof, headbox means mounted on said frame and including an outlet for the pulp suspension to be thickened, said headbox means being so positioned that said outlet is operable to discharge the pulp suspension into or towards a wedge zone defined in part by the belt arrangement where it approaches said first roll, means for driving one of said rolls to cause said belt arrangement to travel around said rolls at a speed effecting the development of centrifugal force causing liquid to be expressed through the belt arrangement where it wraps said rolls and thereby to thicken the pulp carried by said belt arrangement, and means mounted on said frame in a position to collect the resulting thickened pulp.

The apparatus disclosed in the previously mentioned EP-A employs a belt arrangement comprising two perforate belts or wires, disposed one inside the other, which, at the inlet end of the apparatus, are trained around two spaced rolls from which they converge to wrap a third roll and thereby define a generally V-shaped space into which the stock to be dewatered or thickened is delivered.

In operation, the pulp slurry to be thickened is deposited by the headbox in the upper surface of a short, substantially horizontal run of the inside wire which converges with a run of the outside wire on the surface of the large roll after substantial gravity drainage through the inside wire. The resulting sandwich of wire-pulp-wire is then caused to wrap the major portion of the large roll so that it reverses its direction and then travels around additional rolls until it completes the major part of a loop, and during this travel, drainage through the outside wire takes place.

When the sandwich has completed the major part of the loop, the wires separate, and pass in diverging relation above and below a trough in which the thickened pulp is collected, and also pass above and below the headbox. They then reconverge to continue the operation by receiving the continuous pulp slurry flow from the headbox. Throughout their travel as a wire-pulp-wire sandwich, the two wires are maintained under sufficient tension to exert substantial pressure on the pulp therebetween as they wrap each successive roll, and thereby to force liquid to be expressed through the wire which is outermost with respect to each roll.

It is an object of the present invention to provide an apparatus for thickening pulp and paper stock which is less complicated in construction having an improved capacity for producing dewatered paper pulp containing a higher content of solids than the thickener disclosed in the previously mentioned OS 30 05 681.

The present invention is characterised in that the belt arrangement comprises a belt having an inner surface which cooperates with a substantial portion of the surfaces of the rolls to define a space, bounded by the rolls and opposed runs of the belt, in which the headbox means is mounted, in that the wedge zone into which the outlet of the headbox is operable to discharge the pulp suspension is defined by the first roll and the inner surface of the belt where it approaches the first roll, in that the first roll has indentations in the surface thereof, wherein the pulp suspension is received and retained by the belt, in that said centrifugal force is operable to cause liquid to be expressed through the belt where it wraps each of said rolls and thereby to thicken the pulp carried on the inner surface of the belt, and in that upon separation of the belt from the surface of the first roll the partially thickened pulp discharged from the indentations of the first roll is camed on the inner surface of the lower run of the belt towards the second roll, the pulp collecting means being mounted in said space between the headbox means and the second roll, to collect the resulting thickened pulp from the surface of the second roll.

A special feature of the invention lies in the surface characteristics of the rolls around which the wire loop travels. Good results have been obtained because the surface of the first roll or of both of the rolls is grooved or otherwise provided with blind indentations, i. e. which are limited to the surface of the roll and do not transmit liquid therethrough or otherwise reduce the liquid-impervious characteristics of the roll. Test results indicate that with the rolls of such surface characteristics, there is increased space inside the portion of the wire wrapping of each roll wherein fiber can be received and held. Further, due to the effects of centrifugal force, these surface indentations do not retain liquid, but they do increase the capacity of the apparatus for pulp per given unit of time.

A special feature of this embodiment takes advantage of the fact that paper pulp always tends to stick to the smoother of two surfaces with which it is brought into contact, which means that as the wire leaves the surface of the first roll, the pulp will tendta transfer from the inner surface of the wire to the roll A doctor is provided in the wedge zone defined by the departing wire run and the roll surface which will remove the partially thickened pulp from the roll and redeposit it on the inner surface of the wire, accompanied by some mixing action. This partially thickened and redeposited pulp then travels on the wire to the second roll, and its mixed condition promotes more effective dewatering as it travels around the second roll.

An important aspect of this embodiment was derived from observation of the fact that in operation, the liquid initially discharged through the wire, over the first 90° or less of travel of the trapped pulp about the axis of the first roll, has a relatively high concentration of fines which would have sub stantial value if they were retained in the thickened pulp. This fact is taken advantage of, and the fines are recovered, by segregating that portion of the liquid which is first discharged through the wire, and recirculating that segregated liquid, with its high fines content, back to the space enclosed within the wire loop and discharging it on top of the layer of pulp travelling on the lower run of the wire from the first roll to the second roll. While this will necessarily nullify some of the dewatering action which took place at the first roll, this is more than compensated for by the quantity of fines which can be recovered thereby.

In a further alternative modification of the invention, additional dilute pulp may be delivered to the interior of the wire loop in the wedge zone defined by the second roll and the lower run of the wire approaching its surface. Since this second delivery of pulp is made on top of the thickened mat of pulp travelling on the wire, it will be less subject to loss of fines than at the first roll, because that pulp mat will act as a filtering medium which retains a high proportion of these fines. In a further application of this feature of this embodiment, the supplying of additional pulp to the lower run of the wire can be in conjunction with or in addition to the supply of the fines-rich fraction of the white water recirculated from the first roll as described above.

In order that the invention may be more readily understood, various embodiments thereof will now be described with reference to the accompanying drawings, in which:
Fig. 1 is a somewhat diagrammatic side view, partly in section, of thickening apparatus embodying the invention;
Fig. 2 is an end view looking from right to left in Fig. 1 partly in section;
Fig. 3 is an enlarged fragmentary view illustrating the construction and operation of the doctor which removes and mixes the partially thickened pulp from the surface of the roll to which the suspension to be thickened is initially delivered, and illustrating a modified form of stock discharge headbox;
Fig. 4 is a view similar to Fig. 1 showing thickening apparatus in accordance with modifications of the invention; and
Fig. 5 is an enlarged fragmentary section on the line 5-5 in Fig. 4.

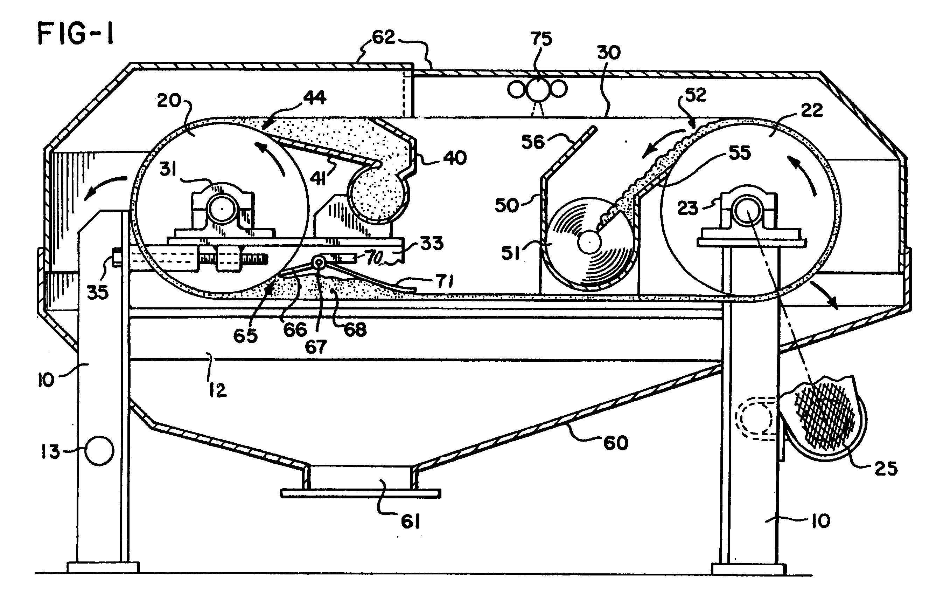

The thickening apparatus embodying the invention as shown in Figs. 1-5 includes a relatively simple frame comprising two columns 10 and 11 on each side connected by side beams 12 and suitable cross braces 13. Two large rolls, namely a first roll 20 and a second roll 22, which are the major operating elements of this apparatus, are mounted at opposite ends of the frame, the roll 22 being shown as mounted by pillow blocks 23 on the tops of the columns 11. This roll 22 is the driven roll, through the belt drive indicated generally at 24 by a motor 25 mounted on the cross brace 13 between the columns 11. Both rolls are shown as being of the same diameter, which is not essential, but if rolls of different diameters are used, the roll 20 which receives the suspension first should be the larger. The first roll 20 has indentations 121 on its surface.

A permeable belt, which comprises an endless loop, and is formed of woven metal or plastic "wire", hereinafter referred to as a wire 30, is trained around the rolls 20 and 22 and defines therewith a space in which the other operating parts of the apparatus are located. The roll 20 has an adjustable mounting on the frame which provides means for tensioning the wire 30, each of the journals of the roll 20 being mounted by a pillow block 31 on a base 33, shown as an I-beam, which is in turn mounted for sliding movement on the side beam 12. Means such as a pair of jack screws 35 connected between bases 33 and the adjacent columns 10 and 11 cause and control this movement to effect corresponding control of the tension in wire 30. Guiding of the wire may be effected by a strip 36 along one or both edges thereof which fits in a peripheral groove 37 in each of rolls 20 and 22.

A headbox 40 is mounted on the same base members 33 as the roll 20 so that it maintains a fixed spacing with respect to roll 20. This headbox is shown as of an open type including lower and upper walls 41 and 42 which extend upwardly to define a spout through which stock is discharged into a wedge zone 44 defined by the surface of the roll 20 and the upper run of wire 30 approaching the roll. The stock to be thickened is fed to one end of the headbox by any convenient feed line (not shown) from the usual stock supply pump (not shown).

At the other end of the space defined by the upper and lower runs of the wire 30 and the rolls 20 and 22 is a trough 50 having a screw conveyor 51 mounted in the bottom thereof for receiving thickened pulp from the surface of roll 22 in a wedge zone 52 defined by the roll surface and the upper run of wire 30 leaving this roll. The trough 50 includes a doctor blade 55 extending along its downstream edge which removes the thickened pulp from the surface of roll 22. An inclined wall 56 along the front edge of trough 50 prevents this pulp from being thrown beyond the trough, and the screw 51 forces the accumulated pulp to a chute 57 at the back of the machine which leads to the next station in the system.

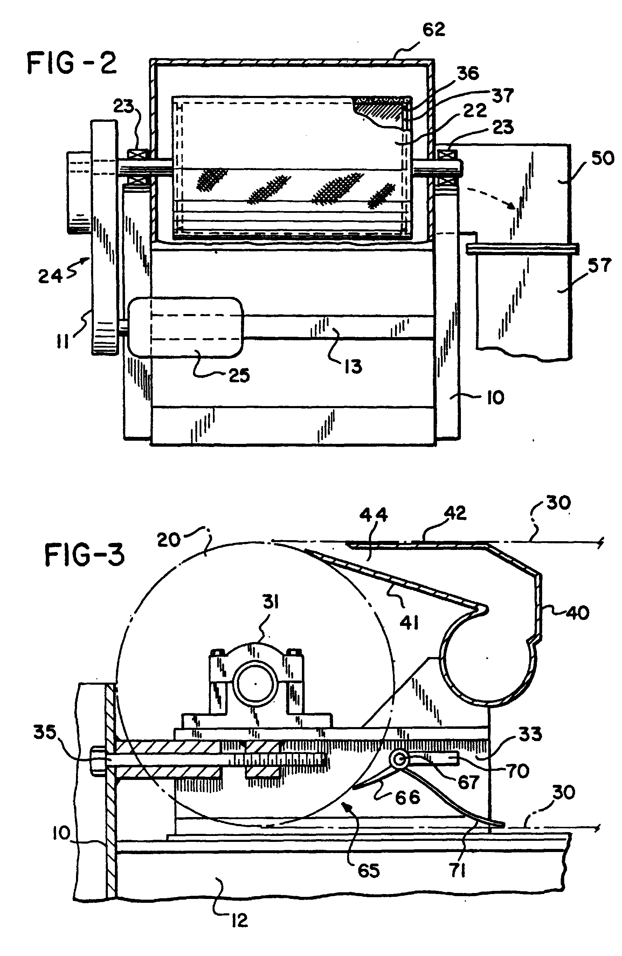

In the operation of this apparatus, the pulp suspension to be thickened is constantly supplied to the wedge zone 44 from the headbox 40, and partially dewatered pulp is trapped between the wire 30 and the surface of roll 20. In order to increase the effectiveness of this action, the upper headbox wall 42 may terminate where it is engaged by the wire 30, at a position spaced by a substantial distance from roll 20 as shown in Fig. 1, or may extend only part way to the roll 20, as shown in Fig. 3, so that the stock is discharged directly against the inner surface of the portion of the wire traveling over it. Under these conditions, a substantial volume of water will be forced through the wire before the wire reaches roll 20, thereby effecting initial dewatering of the pulo to facilitate its being trapped between the wire and the surface of roll 20.

Proper control of wire tension also contributes to the effectiveness of the initial dewatering of the suspension in the wedge zone 44 and as the pulp travels therefrom around the surface of roll 20. More specifically, it is desirable that the wire tension not be so high as to make it difficult for the preliminarily thickened suspension to enter the space between the wire and the surface of roll 20. In other words, if the wire tension is comparatively low, the pulp which has been subjected to initial dewatering as it approaches the small end of the wedge zone will more readily be trapped between the wire and roll 20 than if the wire is very tight For reference purposes on this point tests indicate that wire tension in the range of 0.18 to 7.26 kg per linear cm (1 to 40 pounds per linear inch) is recommended.

With the wire maintained under relatively light tension as described, it will exert some pressure on the trapped pulp moving from the wedge zone 44 into the space between the wire and roll 20, thereby forcing liquid to be expressed therefrom through the interstices in the wire. The primary action of the wire, however, is to serve as a filter medium that holds the fiber on its inner surface against the action of centrifugal force, which is the major factor causing dewatering of the retained pulp. As a result of the restraining or retaining action of the wire on the pulp, it is possible to operate the apparatus embodying the invention at relatively high speeds, particularly in comparison with conventional deckers, e.g. at wire speeds in the range of 640-914 m.(2100-3000 feet) per minute using rolls 20 and 22 which are 0.61 m. (24 inches) in diameter.

The white water expressed in this manner through the wire is thrown into a trough 60 which extends under both rolls 20 and 22 and is provided with a drain outlet 61. A two-piece hood 62 is mounted on the frame above the apparatus as a whole, and it fits into the top of the trough 60 so that any water hitting the inner surface of this hood will drip therefrom into the trough.

As the thickened pulp between the wire and the surface of the roll 20 approaches a wedge zone 65 defined by roll 20 and the lower run of the wire leaving this roll, it will tend to transfer from the wire to the surface of the roll, as a result of the natural tendency of wet pulp to adhere to the smoothest available surface. Therefore, a doctor blade 66 is pivotally mounted at 67 on the bases 33 to extend the full width of this wedge zone 65 in position to remove the pulp 68 from the surface of the roll and redeposit it on the upper surface of the lower wire run. A counterweight 70 projecting from the back edge of blade 66 biases the front edge of the blade against roll 20, and an apron 71 of rubber or like flexible material extends from the back edge of doctor blade 66 to assist in redepositing and smoothing this pulp on the wire. Other forms of doctor than a blade - such as an air doctor - could be used.

This operation will inherently also cause a certain amount of mixing of the pulp, which will therefore oresent a different face to the wire as it travels thereon to the roll 22, where the same combined actions of centrifugal force and wire tension will cause further expression of water through the wire. The resulting thickened pulp reaches the wedge zone 52 between the surface of roll 22 and the upper run of the wire, and this pulp will initially transfer from the wire to the roll surface, from which it is removed by the doctor blade 55 into the trough 50. A shower assembly 75 carried by the frame or the hood 62 washes any remaining pulp from the upper run of the wire and down onto the lower run travelling to the roll 22.

The operating capacity of thickening apparatus embodying the present invention provides a dramatic contrast with conventional deckers, starting with the fact that at the most, a decker is limited to increasing the consistency of feed stock at 1.5% solids to a maximum of approximately 4.5%. Further, a decker wherein the mold has a diameter of 0.91 m. (thirty six inches), which is a conventional size, can handle only 0.51 metric tons (0.5 tons) per day for each 2.54 cm. (inch) of face, so that to handle 71.12 metric tons (70 tons) per day, the mold must be approximately 3.7 m. (twelve feet) in length while the vat in which it operates is correspondingly longer.

Further, the operating capacity of the thickening apparatus embodying the present invention provides a contrast also with apparatus disclosed in OS 30 05 681 and described as the "Vario-Split", starting with the fact that the latter apparatus are limited to increasing the consistency of a feed stock from less than 1.5 % solids to a maximum of approximately 5 - 8 %. Further, for a maximum production of about 100 t/24 h a working width of the machine of 2,4 m is required.

In contrast, in thickening apparatus embodying the invention wherein the rolls 20 and 22 are 0.61 m. (twentyfour inches) in diameter and have their axes 1.83 m. (six feet) apart, only 0.38 m. (fifteen inches) of width is required to handle 63 metric tons (70 tons) per day at a feed consistency of 1.5% solids, and this apparatus will increase that consistency to between 9% and 12% solids. This astonishing increase in capacity - particularly in combination with the contrast in face width of the rolls - is in comparison with deckers materially contributed to by the much higher speed at which the apparatus embodying the invention will operate, namely speeds in the range of 457-914 m. (1500-3000 feet) per minute, whereas deckers are limited to a linear speed in the range of 61 - 91 m. (200-300 feet) per minute.

In comparison with the Vario-Split apparatus as disclosed in OS 30 05 681 the increase in capacity is due to the fact that at least the first roll of the rolls 120 and 122 has surface indentations wherein the pulp can be received while it is restrained against centrifugal discharge by the wire 130.

More specifically, as show in Fig. 5, the roll 120 is provided with axially spaced circumferential grooves 121 separated by circumferential lands 126 on which the wire 130 is supported. As an example of dimensions which have been found satisfactory with a roll 120 having an outer diameter of 61 cm. (24 inches), the grooves 121 may be 4.78 mm. (0.187 inch) in depth and 6.35 mm (0.250 inch) in width, while the lands 126 are 3.18 mm. (0.125 inch) in width.

This arrangement of relatively wide grooves and narrow lands greatly increases the space wherein pulp can be retained by the portion of the wire 130 wrapping roll 120, without interfering with or otherwise affecting the centrifugal dewatering action described above in connection with Fig. 1. The same groove construction can also be provided for the roll 122, and blind indentations of other shapes can be used, such as multiple drilled holes, so long as the rolls remains impervious to liquid beyond the bottoms of any surface indentations therein.

In addition the apparatus embodying the invention is significantly simpler in construction than a decker or a Vario-Split requiring only 2 smooth surfaced rolls with indentations in at least the first one and a short wire loop in contrast to the relatively complex wire-covered structure of the cylinder mold which is the operating member of a decker and in contrast to the plurality of rolls necessary for the Vario-Split.

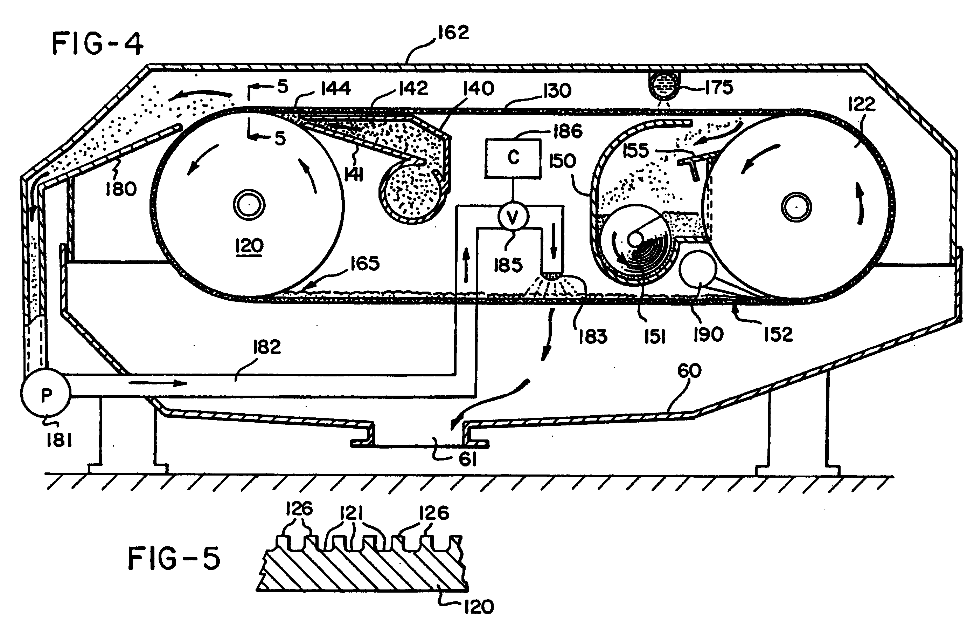

The headbox 140 shown in Fig. 4 is of somewhat different construction from the headbox 40 in Figs. 1 and 3, particularly in that its upper wall 142 is spaced below the upper run of the wire 130 and projects with the lower wall 141 most of the way into the wedge zone 144 defined by the wire 130 and roll 120 so that the stock to be thickened is delivered directly into the apex of this wedge zone rather than against the wire as in Figs. 1 and 3. This headbox construction and arrangement have been found particularly applicable to embodiments of the invention provided with grooved or otherwise surface indented rolls to assure that such surface indentations are filled with stock at the earliest possible instant

Another feature of the embodiment illustrated in Fig. 4 relates to the handling of expressed white water which is rich in fines, as discussed previously, More specifically, a "save-all" pan or shelf 180 is mounted at the end of hood 162 at the appropriate level to intercept the white water discharged through the wire as it travels through the first portion of its wrapping relation with roll 120, e.g. 45-50°. This fines-rich fraction of the white water is recirculated by a pump 181 and and line 182 to a shower pipe 183 or other distributing means located above the bottom run of the wire 130 as it travels from roll 120 to roll 122.

A valve 185 is adjustable to determine how much of the white water from pump 181 is supplied to the thickened pulp and how much is transmitted to other white water collection means. This valve may be operated manually as determined by inspection of the operating conditions of the apparatus, but preferably it would be provided with some type of automatic control responsive to a condition such as the brightness of the discharge pulp or the consistency of the white water. For example, in the use of the apparatus embodying the invention in a de-inking system, this valve could be adjusted automatically to maintain the brightness of the thickened pulp at a constant value.

The selection and installation of such an automatic control is within the skill of the art, and such control is accordingly indicated diagrammatically at 186 in Fig.4. It should also be noted that the spray pipe or other discharge means for fines-rich white water within the loop of wire 130 is subject to substantial variation, and specifically that the white water could be added by way of a spray system located to wash down whatever pulp build-ups might occur within the loop of the wire.

It is also possible to supply stock to be thickened to the interior of the wire loop just ahead of the roll 122 as well as at the roll 120. Thus as shown in Fig. 4, a headbox 190 like the headbox 140 can be installed in the wedge zone 152 defined by the roll 122 and the approaching lower run of the wire 130. With this arrangement, whether or not fines-rich white water is added as already described, the second supply of stock will be laid on top of the mat of partially thickend pulp traveling on the lower run of the wire, and this mat will have a filtering and retaining action on the fines deposited thereon. As previously noted, the secondary headbox 190 can be used and operated with or without the addition of fines-rich white water at the spray pipe 185.

When a secondary headbox 190 is used, it is desirable that the mat of pulp on the lower run of the wire be as smooth as possible. This result is readily obtained by the use of a grooved roll 120, because the doctor 66 of Fig. 1 is no longer needed, by reason of the fact that since the surface of the wire is then smoother than that of the roll, the pulp mat will remain as a smooth layer on the wire rather than transferring to the roll surface is in Fig. 1. In addition, the shower pipe 183, or a supplemental shower pipe, can be located in or near the wedge zone 165 to spray white water against the surface of roll 122 as it rises from the wire 130 to flush fiber therefrom down onto the pulp mat on the wire.

Since the thickening apparatus embodying the invention was developed for use in the treatment of paper making pulp suspensions, it has been described with specific reference thereto It is to be understood, however, that the apparatus could be used to thicken other dilute liquid suspensions of pulp materials, such for example as sludges and the like.

## Claims

1. Apparatus for thickening a suspension of paper pulp material of a consistency of 1,5 % solids in water, comprising:
a) a frame (10 to 13)
b) first and second liquid-impervious rolls (20, 22) rotatably mounted on substantially horizontal axes in spaced relation in said frame,
c) an endless wire belt arrangement trained around said rolls in wrapping relation with the surfaces thereof,
d) headbox means (40) mounted on said frame and including an outlet (41, 42) for the pulp suspension to be thickened;
e) said headbox means being so positioned that said outlet is operable to discharge the pulp suspension into or towards a wedge zone defined in part by the belt arrangement where it approaches said first roll,
f) means (24, 25) for driving one (22) of said rolls to cause said belt arrangement to travel around said rolls at a speed effecting the development of centrifugal action causing liquid to be expressed through the belt arrangement where it wraps said rolls and thereby to thicken the pulp carried by said belt arrangement, and
g) means (50,55) mounted on said frame in a position to collect the resulting thickened pulp,
characterised
(1) in that the belt arrangement comprises a belt (130) having an inner surface which cooperates with a substantial portion of the surface of the rolls (120, 122) to define a space, bounded by the rolls and opposed upper and lower runs of the belt, in which the headbox means (140) is mounted,
(2) in that the wedge zone (144) into which the outlet (141, 142) of the headbox is operable to discharge the pulp suspension is defined by the first roll (120) and the inner surface of the upper run of the belt where it approaches the first roll,
(3) in that the first roll (120) has indentations (121) in the surface thereof, wherein the pulp suspension is received and retained by the belt,
(4) in that said centrifugal force is operable to cause liquid to be expressed through the belt where it wraps each of said rolls and thereby to thicken the pulp carried on the inner surface of the belt, and
(5) in that upon separation of the belt from the surface of the first roll the partially thickened pulp is discharged from the indentations and carried on the upwardly facing inner surface of the lower run of the belt towards the second roll (122), the pulp collecting means (150, 155) being mounted in said space, between the headbox means and the second roll (122), to collect the resulting thickened pulp from the surface of the second roll.

2. A thickening apparatus as defined in claim 1, wherein said belt (30) travels from each of said rolls (20. 22) directly to the other said roll and wraps substantially 180° of the surface of each said roll.

3. A thickening apparatus as defined in claim 1 or 2, wherein said rolls (20, 22) are located in substantially the same horizontal plane.

4. A thickening apparatus as defined in claim 1, 2 or 3, further comprising doctor means (66) located adjacent the wedge zone (65) defined by said first roll (20) and the inner surface of a lower run of said belt (30) leaving said roll, for removing pulp from the surface of said first roll and redepositing such removed pulp on the inner surface of said lower run for travel thereon to said second roll (22).

5. A thickening apparatus as defined in claim 4, wherein said doctor means comprises a blade (66) mounted in said frame with a forward edge thereof engaging said first roll, and an apron (71) of flexible material extending from the rearward edge of said blade to overlie pulp removed from the surface of said roll by said blade and thereby to redeposit such removed pulp on the inner surface of the lower run.

6. A thickening apparatus as defined in any preceding claim, further comprising means (33, 35) mounting said first roll (20) for movement on said frame toward and away from said second roll (22) to effect tensioning of said belt (30).

7. A thickening apparatus as defined in claim 6 in combination with claim 4 or 5, wherein said doctor means is mounted on the same movably mounted means as said first roll.

8. A thickening apparatus as defined in claim 6 or 7, wherein said headbox means (40) is mounted on the same movably mounted means (33) as said first roll (20) to maintain a fixed relation thereof with said first roll.

9. A thickening apparatus as defined in any preceding claim. wherein said headbox outlet comprises an upper wall (42) which terminates where it engages said belt (30) at a position spaced by a substantial distance upstream from said first roll (20), said position being such that the pulp suspension is delivered directly to the inner surface of said belt in advance of said first roll to promote partial dewatering of the suspension upwardly through said belt prior to the trapping of pulp between said belt and first roll.

10. A thickening apparatus as defined in any of claims 1 to 8, wherein said headbox outlet comprises upper and lower walls (41, 42) which converge into the wedge zone (44) defined by the surface of said first roll (20) and the portion of said belt (30) approaching said roll and which direct the pulp suspension into the apex of said wedge zone.

11. A thickening apparatus as defined in any preceding claim, wherein said means (24, 25) for driving one (20, 120) of said rolls is operable to cause an upper run of the belt to travel toward said first roll (20, 120) and a lower run of the belt to travel toward said second roll (22, 122).

12. A thickening apparatus as defined in any preceding claim, wherein both of said rolls (120, 122) have indentations (121) in the surfaces thereof wherein the pulp suspension is received and retained by said belt and from which said retained pulp is discharged by centrifugal force upon separation of said belt from said roll surfaces.

13. A thickening apparatus as defined in any of the preceeding claims, wherein said surface indentations comprise circumferentially arranged grooves (121) in said roll surface separated by circumferential land portions (126) of said roll surface.

14. A thickening apparatus as defined in any of the preceeding claims, further comprising means (180) for intercepting the liquid expressed through said belt from only an upper portion of said first roll, and means (181-185) for recirculating said liquid to said space between said belt runs and for discharging said liquid on the pulp travelling on the lower run of said belt from said first roll to said second roll.

15. A thickening apparatus as defined in any of the preceeding claims, further comprising secondary headbox means (190) mounted on said frame adjacent a wedge zone (152) defined by said second roll (122) and the portion of the lower run of said belt (130) approaching said second roll, said secondary headbox means including an outlet for discharging pulp suspension into said wedge zone (152) on top of the layer of pulp entering said wedge zone on the lower run of said belt.

## Patentansprüche

1. Vorrichtung zum Eindicken einer Suspension von Papier-Pulpematerial mit einer Konsistenz von 1.5% fester Bestandteile in Wasser, mit:
a) einem Rahmen (10 - 13).
b) ersten und zweiten flüssigkeitsundurchlässigen Rollen (20, 22), die auf im wesentlichen horizontalen Achsen im Abstand in dem Rahmen drehbar montiert sind.
c) einer endlosen Langsiebriemenanordnung, welche auf die Rollen, ihre Oberflächen umgreifend, aufgezogen ist.
d) Stoffauflaufeinrichtungen (40), welche an dem Rahmen befestigt sind und einen Auslaß (41, 42) für die einzudickende Pulpesuspension aufweisen;
e) wobei die Stoffauflaufeinrichtungen so angeordnet sind, daß der Auslaß betreibbar ist, um die Pulpesuspension in eine keilförmige Zone oder zu dieser hin, welche zum Teil von der Riemenanordnung gebildet ist, wo sie sich der ersten Rolle nähert, ausströmen zu lassen.
t) Mitteln (24, 25) zum Antrieb einer (22) der Rollen, um die Riemenanordnung zu veranlassen, die Rollen mit einer Geschwindigkeit zu umlaufen, welche die Entwicklung einer Zentrifugalkraft bewirkt, die ihrerseits veranlaßt, daß die Flüssigkeit durch die Riemenanordnung dort ausgepreßt wird, wo sie die Rollen umschlingt, und dadurch die Pulpe, welche von der Riemenanordnung getragen wird. eingedickt wird, und
g) Mitteln (50, 55), die an dem Rahmen in einer Position angebracht sind, um die entstehende eingedickte Pulpe zu sammeln,
dadurch gekennzeichnet,
(1) daß die Riemenanordnung einen Riemen (130) aufweist, dessen innere Oberfläche mit einem wesentlichen Teil der Oberfläche der Rollen (120, 122) zur Bildung eines Raumes zusammenwirkt, welcher durch die Rollen und gegenüberliegende obere und untere Trums des Riemens begrenzt wird, in welchem die Stoffauflaufeinrichtung (140) angebracht ist,
(2) daß die keilförmige Zone (144), in welche der Auslaß (141, 142) des Stoffauflaufkastens betrieblich die Pulpensuspension ausströmen läßt, von der ersten Rolle (120) und der inneren Oberfläche des oberen Trums des Riemens gebildet ist, wo er sich der ersten Rolle nähert,
(3) daß die erste Rolle (120) Vertiefungen (121) in ihrer Oberfläche hat, worin die Pulpe-Suspension aufgenommen und durch den Riemen zurückgehalten wird,
(4) daß die Zentrifugalkraft betrieblich bewirkt, daß Flüssigkeit durch den Riemen dort ausgepreßt wird, wo er jede der Rollen umgreift, und dadurch die Pulpe eindickt, welche auf der Innenfläche des Riemens getragen wird, und
(5) daß bei Trennung des Riemens von der Oberfläche der ersten Rolle die teilweise eingedickte Pulpe aus den Vertiefungen entladen und auf der nach oben zeigenden Innenfläche des unteren Trums des Riemens zur zweiten Rolle (122) geführt wird. wobei die Pulpensammelmittel (150, 155) in dem Raum zwischen der Stoffauflaufeinrichtung und der zweiten Rolle (22) angebracht sind, um die entstehende eingedickte Pulpe von der Oberfläche der zweiten Rolle anzusammeln.

2. Eindickvorrichtung nach Anspruch 1, wobei der Riemen (30) von jeder der Rollen (20, 22) direkt zu der anderen Rolle verläuft und die Oberfläche jeder der Rollen im wesentlichen über 180° umschlingt.

3. Eindickvorrichtung nach Anspruch 1 oder 2, wobei die Rollen (20, 22) im wesentlichen in derselben horizontalen Ebene angeordnet sind.

4. Eindickvorrichtung nach Anspruch 1, 2 oder 3, ferner mit Abstreifeinrichtungen (66), die neben der keilförmigen Zone (65) angeordnet sind, welche durch die erste Rolle (20) und die Innenfläche eines unteren Trums des Riemens (30), welcher die Rolle verläßt, gebildet ist, um Pulpe von der Oberfläche der ersten Rolle zu entfernen und die so entfernte Pulpe wieder auf der Innenfläche des unteren Trums zum Weitertransport auf diesem zur zweiten Rolle (22) abzusetzen.

5. Eindickvorrichtung nach Anspruch 4, wobei das Abstreifmittel ein Blatt (66) aufweist, welches in dem Rahmen montiert ist, wobei seine Vorderkante mit der ersten Rolle in Eingriff tritt, sowie eine Schürze (71) aus flexiblem Material, welche sich von der rückwärtigen Kante des Blattes erstreckt, so daß sie auf der Pulpe, welche durch das Blatt von der Oberfläche der Rolle abgestreift wird, aufliegt und dadurch diese abgenommene Pulpe auf die Innenfläche des unteren Trums wieder abscheidet.

6. Eindickvorrichtung nach einem vorhergehenden Anspruch, ferner mit Mitteln (33, 35) für die Anbringung der ersten Rolle (20) für die Bewegung auf dem Rahmen und von der zweiten Rolle (22) fort, um ein Spannen des Riemens (30) zu bewirken.

7. Eindickvorrichtung nach Anspruch 6 in Kombination mit Anspruch 4 oder 5, wobei die Abstreifeinrichtung auf derselben bewegbar angeordneten Einrichtung wie die erste Rolle angebracht ist.

8. Eindickvorrichtung nach Anspruch 6 oder 7, wobei die Stoffauflaufeinrichtung (40) auf demselben bewegbar angebrachten Mittel (33) wie die erste Rolle (20) angebracht ist, um seine feste Lage mit der ersten Rolle aufrechtzuerhalten.

9. Eindickvorrichtung nach einem vorhergehenden Anspruch, wobei der Stoffauflaufkastenauslaß eine obere Wand (42) aufweist, die dort endet, wo sie mit dem Riemen (30) an einer Position in Eingriff tritt, die in einem wesentlichen Abstand aufstromig von der ersten Rolle (20) angeordnet ist, wobei die Position derart ist, daß die Pulpensuspension direkt auf die Innenfläche des Riemens vor der ersten Rolle geführt wird, um ein teilweises Entwässern der Suspension nach oben durch den Riemen zu fördern, bevor die Pulpe zwischen dem Riemen und der ersten Rolle erfaßt wird.

10. Eindickvorrichtung nach einem der Ansprüche 1 bis 8, wobei der Stoffauflaufkastenauslaß obere und untere Wände (41, 42) aufweist, welche in die keilförmige Zone (44) zusammenlaufen, welche durch die Oberfläche der ersten Rolle (20) und den auf diese Rolle zulaufenden Abschnitt des Riemens (30) gebildet wird, und welche die Pulpesuspension in die Spitze dieser Keilzone leiten.

11. Eindickvorrichtung nach einem vorhergehenden Anspruch, wobei das Mittel (24, 25) für den Antrieb einer (20, 120) der Rollen im Betrieb dafür sorgt, daß ein oberes Trum des Riemens zur ersten Rolle (20, 120) hin läuft und ein unteres Trum des Riemens zu der zweiten Rolle (22, 122) hin läuft.

12. Eindickvorrichtung nach einem vorhergehenden Anspruch, wobei beide Rollen (120, 122) Vertiefungen (121) in ihren Oberflächen aufweisen, in welchen die Pulpensuspension aufgenommen und durch den Riemen zurückgehalten wird und von welchen die zurückgehaltene Pulpe nach Trennung des Riemens von den Rollenoberflächen durch Zentrifugalkraft entfernt wird.

13. Eindickvorrichtung nach einem vorhergehenden Anspruch, wobei die Oberflächenvertiefungen am Umfang angeordnete Nuten (121) in der Rollenoberfläche aufweisen, welche durch umlaufende Stege bzw. Walzenabschnitte (126) der Rollenoberfläche getrennt sind.

14. Eindickvorrichtung nach einem vorhergehenden Anspruch, ferner mit Mitteln (180) zum Auffangen der durch den Riemen ausgepreßten Flüssigkeit nur aus einem oberen Abschnitt der ersten Rolle und Mitteln (181 - 185) zur Rückführung der Flüssigkeit in den Raum zwischen den Riementrums und zur Abgabe dieser Flüssigkeit auf die Pulpe, welche auf dem unteren Trum des Riemens von der ersten Rolle zu der zweiten Rolle läuft.

15. Eindickvorrichtung nach einem vorhergehenden Anspruch, ferner mit sekundären Stoffauflaufmitteln (190), die an dem Rahmen nahe der keilförmigen Zone (152) angebracht sind, welche durch die zweite Rolle (122) und den Abschnitt des unteren Trums des Riemens (130) gebildet ist, der auf die zweite Rolle zuläuft, wobei die sekundären Stoffauflaufmittel einen Auslaß aufweisen für die Abgabe von Pulpensuspension in die keilförmige Zone (152) oben auf die Pulpenschicht, welche in die keilförmige auf dem unteren Trum des Riemens eintritt.

## Revendications

1. Appareil pour l'épaississement d'une suspension dans l'eau d'un matériau pulpeux de papier d'une consistance de 1,5% à l'état solide, comprenant :
a) un bâti (10 à 13),
b) un premier et un second tambours (20,22) imperméables au liquide, montés rotatifs sur des axes sensiblement horizontaux sur le bâti et écartés l'un de l'autre,
c) un arrangement de bande sans fin en fil d'acier entraîné autour desdits tambours en enveloppant leurs surfaces,
d) un moyen de bâche d'alimentation (40) monté sur ledit bâti et comportant une sortie (41,42) pour la suspension de pulpe à épaissir ;
e) ledit moyen de bâche d'alimentation étant placé de façon que ladite sortie soit opérante pour délivrer la suspension de pulpe dans, ou vers, une zone de coin définie en partie par l'arrangement de bande là où il approche ledit premier tambour,
f) des moyens (24,25) pour entraîner l'un (22) desdits tambours pour provoquer le déplacement dudit arrangement de bande autour desdits tambours à une vitesse produisant le développement de force centrifuge faisant exprimer le liquide à travers l'arrangement de bande là où il enveloppe lesdits tambours et ainsi épaissir la pulpe transportée par ledit arrangement de bande, et
g) des moyens (50,55) montés sur ledit bâti à un emplacement pour collecter la pulpe épaissie résultante,
caractérisé
**(1) en ce que** l'arrangement de bande comporte une bande (130) ayant une surface intérieure qui coopère avec une partie substantielle de la surface des tambours (120,122) pour définir un espace délimité par les tambours et les brins inférieurs et supérieurs opposés de la bande dans lequel le moyen de bâche d'alimentation (140) est monté,
**(2) en ce que** la zone de coin (144) dans laquelle la sortie (141,142) de la bâche d'alimentation est opérante pour délivrer la suspension de pulpe est définie par le premier tambour (120) et la surface intérieure du brin supérieur de la bande là où elle s'approche du premier tambour,
**(3) en ce que** le premier tambour (120) a des indentations (121) à sa surface dans lesquelles la suspension de pulpe est reçue et retenue par la bande,
**(4) en ce que** ladite force centrifuge est opérante pour faire exprimer le liquide à travers la bande là où elle enveloppe chacun desdits tambours et ainsi épaissir la pulpe transportée sur la surface intérieure de la bande, et
**(5) en ce que**, lors de la séparation de la bande de la surface du premier tambour, la pulpe partiellement épaissie est dégagée des indentations et transportée sur la surface intérieure tournée vers le haut du brin inférieur de la bande vers le second tambour (122), les moyens de collecte de la pulpe (150,155) étant montés dans ledit espace, entre le moyen de bâche d'alimentation et le second tambour (122), pour collecter la pulpe épaissie résultante de la surface du second tambour.

2. Appareil pour l'épaississement selon la revendication 1, dans lequel ladite bande (30) se déplace à partir de chacun des tambours (20,22) directement jusqu'à l'autre tambour et enveloppe sensiblement 180° de la surface de chacun desdits tambours.

3. Appareil pour l'épaississement selon la revendication 1 ou la revendication 2, dans lequel lesdits tambours (20,22) sont disposés sensiblement dans le même plan horizontal.

4. Appareil pour l'épaississement selon la revendication 1, la revendication 2 ou la revendication 3, comportant en outre un moyen de racle (66) disposé adjacent à la zone de coin (65) définie par ledit premier tambour (20) et la surface intérieure d'un brin inférieur de ladite bande (30) quittant ledit tambour, pour enlever la pulpe de la surface dudit premier tambour et redéposer cette pulpe enlevée sur la surface intérieure dudit brin inférieur, pour y être emmenée jusqu'audit second tambour (22).

5. Appareil pour l'épaississement selon la revendicati.on 4, dans lequel ledit moyen de racle comprend une lame (66) montée dans ledit bâti avec un bord avant appliqué contre ledit premier tambour, et un tablier (71) en matériau flexible s'étendant à partir du bord arrière de ladite lame pour reposer sur la pulpe enlevée de la surface dudit tambour par ladite lame et ainsi redéposer cette pulpe enlevée sur la surface intérieure du brin inférieur.

6. Appareil pour l'épaississement selon une quelconque des revendications précédentes, comportant en outre des moyens (33,35) supportant ledit premier tambour (20) de façon à pouvoir être déplacé sur ledit bâti pour se rapprocher ou s'écarter dudit second tambour (22) pour réaliser la tension de la ladite bande (30).

7. Appareil pour l'épaississement selon la revendication 6 en combinaison avec la revendication 4 ou la revendication 5, dans lequel ledit moyen de racle est monté sur les mêmes moyens de support mobiles que le premier tambour.

8. Appareil pour l'épaississement selon la revendication 6 ou la revendication 7, dans lequel ledit moyen de bâche d'alimentation (40) est monté sur les mêmes moyens de support (33) que ledit premier tambour (20) pour maintenir une relation fixe de ce moyen (40) avec ledit premier tambour.

9. Appareil pour l'épaississement selon une quelconque des revendications précédentes, dans lequel ladite sortie de bâche d'alimentation comporte une paroi supérieure (42) qui se termine là où elle est appliquée contre ladite bande (30) à un emplacement écarté d'une distance substantielle en amont dudit premier tambour (20), ledit emplacement étant tel que la suspension de la pulpe est délivrée directement sur la surface intérieure de ladite bande en avance dudit premier tambour pour promouvoir une déshydratation partielle de la suspension vers le haut à travers ladite bande avant le piégeage de la pulpe entre ladite bande et le premier tambour.

10. Appareil pour l'épaississement selon l'une des revendications 1 à 8, dans lequel ladite sortie de bâche d'alimentation comporte des parois supérieure et inférieure (42,41) qui convergent dans la zone de coin (44) définie par la surface dudit premier tambour (20) et la partie de ladite bande (30) qui s'approche dudit tambour et qui dirige la suspension de pulpe vers le sommet de ladite zone de coin.

11. Appareil pour l'épaississement selon une quelconque des revendications précédentes, dans lequel ledit moyen (24,25) pour entraîner l'un (20,120) desdits tambours est opérant pour faire avancer un brin supérieur de la bande vers ledit premier tambour (20,120) et un brin inférieur de la bande vers ledit second tambour (22,122).

12. Appareil pour l'épaississement selon une quelconque des revendications précédentes, dans lequel les deux tambours (120,122) ont des indentations (121) à leurs surfaces dans lesquelles la suspension de pulpe est reçue et retenue par ladite bande et à partir desquelles ladite pulpe retenue est délivrée par la force centrifuge lors de la séparation de ladite bande des surfaces desdits tambours.

13. Appareil pour l'épaississement selon une quelconque des revendications précédentes, dans lequel lesdites indentations de surface comportent des rainures (121) disposées circonférentiellement dans la surface dudit tambour, séparées par des éléments de cloisonnement circonférentiels (126) de la surface dudit tambour.

14. Appareil pour l'épaississement selon une quelconque des revendications précédentes, comportant en outre des moyens (180) pour intercepter le liquide exprimé à travers ladite bande, de seulement une partie supérieure dudit premier tambour, et des moyens (181-185) pour faire recirculer ledit liquide vers ledit espace entre lesdits brins de bande et pour décharger ledit liquide sur la pulpe circulant sur le brin inférieur de ladite bande depuis ledit premier tambour jusqu'audit second tambour.

15. Appareil pour l'épaississement selon une quelconque des revendications précédentes, comportant en outre un moyen de bâche d'alimentation secondaire (190) monté sur ledit bâti adjacent à une zone de coin (152) définie par le second tambour (122) et la partie du brin inférieur de ladite bande (130) qui s'approche dudit second tambour, ledit moyen de bâche d'alimentation secondaire comportant une sortie pour délivrer la suspension de pulpe dans ladite zone de coin (152) sur le dessus de la couche de pulpe qui pénètre dans ladite zone de coin sur le brin inférieur de ladite bande.
